# EUROPEAN PATENT SPECIFICATION

(11) **EP 2 128 494 B1**
(45) Date of publication and mention of the grant of the patent: **23.05.2012**
(21) Application number: 08425387.1
(22) Date of filing: 29.05.2008
(51) Int. Cl.: F16H 29/16, F16H 37/08

(54) **Continuously variable transmission**
Stufenlos verstellbares Getriebe
Transmission variable continue

(43) Date of publication of application: 02.12.2009
(73) Proprietor: Girotto Brevetti S.R.L., 31027 Spresiano (TV) (IT)
(72) Inventor: Girotto, Adriano, 31027 Spresiano (TV) (IT)

(56) References cited:
- EP-A- 1 028 271
- EP-A- 1 688 645
- US-A- 3 987 682

## Description

The invention refers to a continuously variable transmission-ratio (briefly TR) mechanical transmission (briefly CVT).

In EP 1 688 645 is described a known CVT having rollers along a circumference, see its fig. 2. There are two coaxial rotors, one inside the other, between which some rollers are interposed. The inner rotor is provided with a superficial inclined-plane toothing. Altogether the rotors and the rollers constitute a free wheel.

By offsetting the rotors (i.e. by increasing their reciprocal eccentricity, see fig. 8 in EP 1 688 645), the toothing of the inner rotor in its 360 degrees of rotation cyclically nears to, and depart from, the outer rotor, thereby compressing and releasing the rollers, which in the phase of compression (about 180°) transfer, time after time (passing the baton in the thrust action), rotary motion from the inner rotor to the outer rotor with an increased rpm, because the transferred motion is that of the inner rotor summed to that of the roller

Notwithstanding the optimal efficiency of this transmission, improvements may be brought in.

There are indeed two conflicting needs: increasing the transmission ratio TR of a stage and assuring a fluid torque transfer between rotors.

The TR between the rotors is higher the greater the length of the inclined planes provided on the inner rotor (namely, the longer the travel of the roller on them). Also, the total torque transferred to the outer rotor is the "averaged" sum of the impulsive contributions of each roller when it is in the phase of thrust/grip.

Thus, while it would be desired to lower the number of inclined planes on rotor R1 in order to increase the length thereof, such number should be increased to have a steady torque transmission.

Another aspect is the cyclic variation of the contact angle between a roller with the relative inclined plane on the inner rotor and the same roller with the outer rotor. Since the containment angle, i.e. the instantaneous angle between the surfaces of a roller and the rotor on which it rolls, varies dynamically, the transmission is to be designed such that it always meets the numerical relations described above, i.e. in the worst case. The lesser is the amplitude of the containment angle, the bigger are the compression stresses on the roller, which determine dilatations and expansions and, therefore, a rise in losses and a drop in efficiency.

US 3 987 682 dicloses CVT according to the preamble of claim 1 and describes a CVT employing outer sprags or cams to drive an inner, driven output shaft. The sprags has a first contact profile in contact with the output shaft, and a second, opposite profile which cooperates with a spring belt urging the sprags in contact with the inner rotor.

The object of the present invention is to devise an alternative CVT. The devised solution is recited in Claim 1.Further preferred embodiments are defined in the dependent claims.

The advantages and the details of the invention shall be more evident from the description of preferred embodiments, illustrated in the attached drawings wherein:
fig. 1 shows a principle scheme of a CVT ;
fig. 2a-2c show a variant of rolling member;
fig. 2d-2e show a second variant of rolling member;
figures 3a-3b show schematically a CVT according to the invention;
figures 4a-4c show schematically a variant of CVT (one vertical cross-section and two prospectical views);
figures 5a-5b show a second variant of CVT;
fig. 6a shows a third variant of rolling member;
figures 6b, 6c show schematically a variant of CVT according to the invention with the rolling member of fig. 6a.

The containment angle can be kept substantially constant or at a desired value for the whole duration of the rolling in the thrust phase (called active phase) of each rolling member.

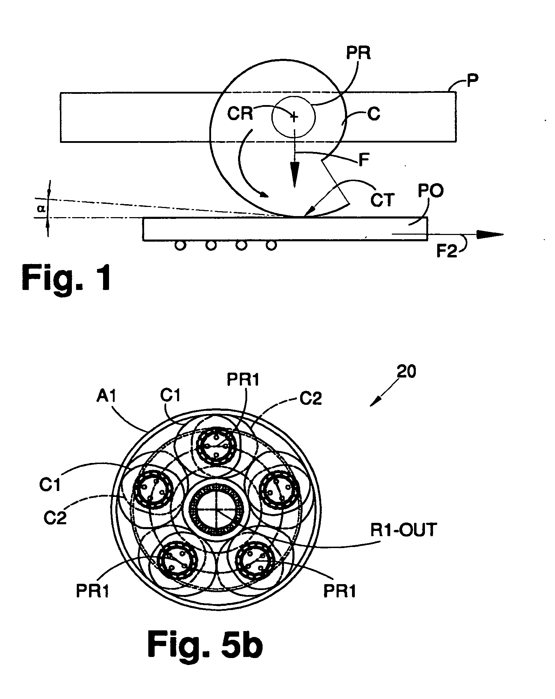

Let's consider fig. 1, sketching the working principle.

Instead of the assembly [inclined plane + roller] used in EP 1 688 645, these two elements are combined in a rolling member or a cam C, whose profile has a progressively longer distance from its rotation center CR, here constituted by a pin PR arranged on a support P. In practice, the ramp of the inclined plane P in fig. 1 has been transferred directly on the rolling member, thereby transforming the roller R of EP 1 688 645 in the cam C of fig. 1.

The profile of the cam C is in contact at point CT with a horizontal plane PO, and the profile of the cam C is such to assure that the contact angle α (defined as the angle between the plane PO and the tangent to the same profile of the cam C at the contact point CT) be (preferably) substantially constant.

By applying an orthogonal force F to the support P, and hence to the pin PR and to the cam C, the cam C nears to the plane PO and is obliged to roll thereupon in the verse indicated by the arrow. The cam C while rotating pushes with a force F2 the plane PO, which consequently moves laterally. But this time the containment angle does not vary (or varies little), thereby eliminating the drawbacks.

Preferably the cam C is produced to have a profile such as to keep constant its contact angle with the plane PO, or more generally with a rotating part to which mechanical power and rotary motion is to be transferred. This way the optimal friction between cams and rotors is guaranteed, the friction being determined by the pressure on the same cam C and by the mutual friction coefficient.

The constancy of the contact angle is however only a preferred embodiment. It might be useful to carry out cams which offer, during their rolling, a contact angle with a slightly increasing or decreasing pattern/trend. This to obtain a desired distribution of the thrust pressures on the (inner and/or outer) rotors. A cunning of this type has the advantage of designing the specific pressures that every part exerts, thereby increasing the efficiency thereof.

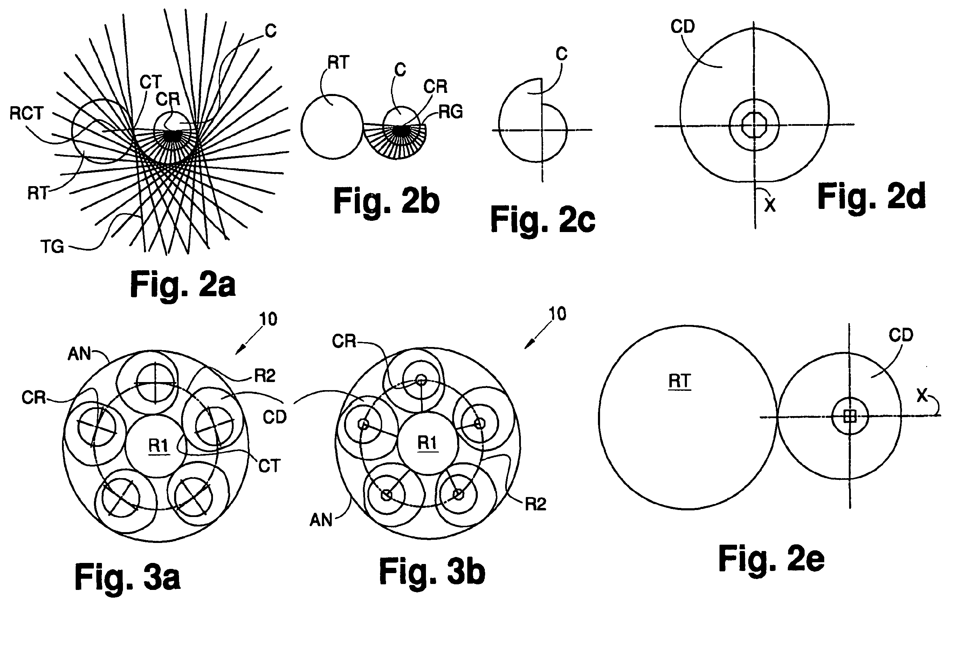

Figures 2a-2c show a preferred geometrical construction for the cam C and the coupling by contact with a rotor (or shaft) RT. Given the constructional analogy, some numerals used in fig. 1 are retained.

The cam C has an evolvent profile, preferably a logarithmic spiral profile. It is about a geometrical construction wherein the generation of the cam profile is carried out by maintaining a proportionality between the angular increment of the profile and the pitch of moving away from the rotation center CR.

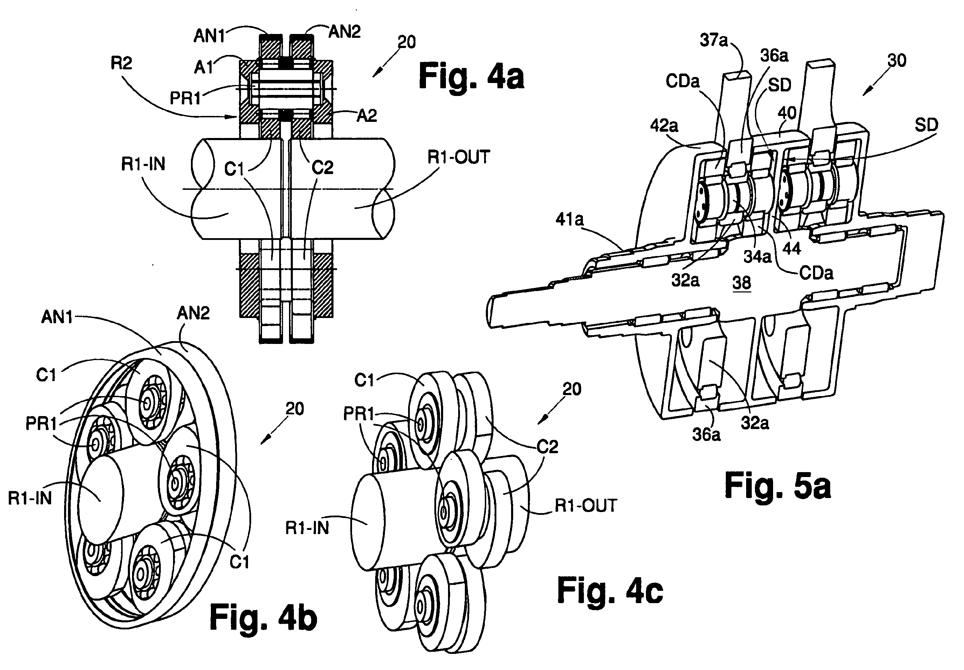

Every straight line passing through the rotation center CR of the cam C intersects its profile with the same angle, namely the angle between a radius (or trajectory vector) RG and the relative line TG tangent to the profile is constant. It follows that when the cam C rolls without slipping on the shaft RT (fig. 4a), with respect of the contact point CT the angle between a radius RCT of the shaft CT and a radius RG of the cam C does not change. Geometrically, therefore, one can infer that the angle α as defined above in fig. 3 does not change either.

Advantageously, all the profile of the cams C can be exploited, and not only about 180°, replicating specularly the contact profile thereof (constructed for instance as in figures 2a-2c) on the opposite side, see cams CD in figures 2d-2e. Thus symmetrical cams with respect to a median axis X are obtained (figure 2d).

Figures 3a-3b show an application scheme of the concept just set out, repeated for five cams CD along a circumference to constitute a CVT according to the invention indicated by 10.

There is a central cylindrical rotor (or shaft or core) R1 and an annular outer rotor (or disc) R2, arranged one inside the other. The rotor R2 rotatably supports the five cams CD (the cams CD are pivoted on the rotor R2 by rolling bearings), all with their profile in contact with the rotor R1. It should be noted that the overall structure is that of a free wheel.

In fig. 3a, when the outer rotor R2 rotates, it drags with it the inner rotor R1 because of the binding/sticking of all the cams CD. Here the TR between the two rotors R1, R2 amount to 1.

By offsetting the rotor R2 with respect of the rotor R1 (i.e. increasing the mutual eccentricity, see fig.3b), the distance between the center of rotation CR of a cam CD and the rotor R1 varies cyclically during the 360° of rotation of the rotor R2. Every cam CD nears and departs from the rotor R1, with alternate motion. The equivalent effect of cyclically nearing and lifting the cam CD of fig. 1 with respect with the plane PO is obtained: during the phase of nearing the cam CD pushes the plane PO, while during that of lifting the cam CD slips on it, without imparting force.

Therefore, cyclically each of the cams CD of the CVT 10 in turn pushes the rotor R1, rotating about it for roughly 180° of "satellite" rotation and at the same time rotating on itself, again for roughly 180° (non-slipping condition). The two rotary motions combined vectorially determine a TR > 1.

One can observe that as a cam CD rolls without slipping on the rotor R1 pushing it, the mutual point of contact CT progressively travels the profile of the cam CD, but the contact angle at the point CT remains constant (with the exceptions seen before).

In the figures 3a-3b the cams employed are indeed double-profile cams. The specular (or mirror) cam profile which does not contact the rotor R1 is used to always ensure the contact between each cam CD and the rotor R1. To this purpose a containment ring AN is mounted concentrically to the rotor R1, (see figures 3a-3b), such that it holds within it all the cams CD. The cams CD, in fact, remain in direct contact with the ring AN without ever coming off. Owing to the geometry of the cams CD, for every contact point CT thereof with the rotor R1 there is another one on the ring AN, so the cams always move between the rotor R1 and the ring AN with contact on two sides, without leaving clearance.

Actually, there must be a clearance of some hundredth to let the cams slipping during the recovery phase. This span (e.g. some hundredth) is then filled by a lubricating oil film (always present) which will guarantee the grip resumption during the phase of the cam compression.

Owing to the action by the cams CD, the ring AN is subject to the same thrusts imposed on the rotor R1. The system geometry is such that an angular velocity greater than that of the rotor R1 is imparted to the ring AN by the rotor R2. A solution is to mount the ring AN on bearings and let it rotate idle, or make it integral with the rotor R1, as described below.

In each case, it should be noted that there is no functional and dynamic conflict for the simultaneous contact of the cams CD on the rotor R1 and on the ring AN. The ring AN, as explained, rotates with a greater angular velocity than the rotor R1. Each cam CD, therefore, works with respect to the ring AN in free wheel operation (such is the construction!), because there is a plane, the ring AN, which rotates more than the rolling member, the cam, and only slipping can derive therefrom. A proper lubrication between the cams CD and the ring AN is enough to prevent wear.

Note that the structure of the CVT 10 (like for the others in the following) is bidirectional and reversible: the rotary motion can be transferred from the rotor R2 to the rotor R1 or vice versa, on condition that the cams be properly oriented. The resulting TR is always the same.

Figures 4a-c show a possible embodiment 20 for a CVT. Here the cam-carrying rotor R2 described above in fig. 3a, 3b is constituted by two rings (or discs) A1, A2 mounted on the exterior and offsettably with respect both to an inner rotor/shaft R1-IN, which brings mechanical power to the input of the CVT 20, and to an independent rotor R1-OUT, coaxial to the rotor R1-IN and which brings mechanical power to the output of the CVT 20. The two discs A1, A2 are connected and made integral by pins PR1, on which two groups of cams are mounted with bearings (C1, C2 indicate respectively the cams for each group). The cams of each group are arranged with polar symmetry on the discs A1, A2 (like in fig. 3a), and they are implemented as already described above. The pins PR1 act as rotation fulcrum for the cams C1, C2. Note that on every pin PR1 there are superimposed one cam C1 and one cam C2, with their tip pointing in opposite directions.

The cams C1 of the first group are in contact on one side with the rotor R1-IN, on the other side - on the outside - with a containment ring AN1, according to the scheme and principles of fig. 3a, 3b. The cams C2 of the second group are in contact with the rotor R1-OUT. The second group of cams C2, too, is in contact, on the outside, with a containment ring of its own, called AN2 (see fig. 4b). In fig. 4c the CVT 20 is shown without the rings AN 1, AN2 and, as in fig. 4b, without the rotor R2, in order to highlight well the cam C1, C2 arrangement.

It can be seen that the CVT 20 is formed by two equal cascaded stages (one following the other): the first stage is formed by the rotor R1-IN and the first group of cams C1, the second stage is formed by the second group of cams C2 and the rotor R1-OUT. The two equal stages are cinematically connected in cascade connection by a common member, i.e. the cam-carrying rotor R2.

When the discs A1, A2 (and therefore the crown of cams C1, C2) are concentric to the rotors R1-IN and R1-OUT, the two stages operate like two free wheels, and the TR between rotors R1-IN and R1-OUT is 1.

When the discs A1, A2 are not concentric to the rotors R1-IN and R1-OUT, i.e. offset, the rotor R1-IN while rotating moves the disc A1 through the first group of cams C1 with a TR > 1. The disc A2, integral with the disc A1, then transfers with the same TR the rotary motion to the rotor R1-OUT, through the second group of cams C2. As a whole the TR between the rotors R1-IN and R1-OUT is the product of that of the two single stages, and for this reason much higher. Nonetheless, the compact structure of the CVT 20 may be appreciated.

Note the different orientation of the cams C1, C2. To each one of the cams C1 corresponds a twin cam C2, set side by side and rotated by 180°. This is necessary because in the first stage the path motion is
rotor R1-IN -> cams C1 -> discs A1, A2;
while in the second stage is
discs A 1, A2 -> cams C2 -> rotor R1-OUT.

If the cams C1, C2 were all directed in the same way, there would be an interruption in the motion transfer for one of the two groups of cams, since such a stage would operate like an idle free wheel.

Each group of cams is therefore mounted on a respective face of the disc 32a. On its turn, the disc 32a is rotatably supported by a circular ring 36a which, through a fork 37a and mechanisms not shown, allows to move eccentrically the disc 32a with respect of an inner central shaft 38 (common to the symmetric parts of the CVT 30), which is integral in the middle with a double containment cage 40. The shaft 38 is coaxially inserted in the central hole of the disc 32a. The cage 40 shows two opposite annular seats SOa, SOb, which are separated by a wall 44. A group of cams COa of the disc 32a are housed with peripheral contact inside the seats SOa. The other group of cams COa is housed in a cover bell 42a of a tubular hollow rotor 41 a. The rotor 41 a is rotatably arranged about the shaft 38, the inside of the bell 42a housing, once mounted, said first group of cams CDa.

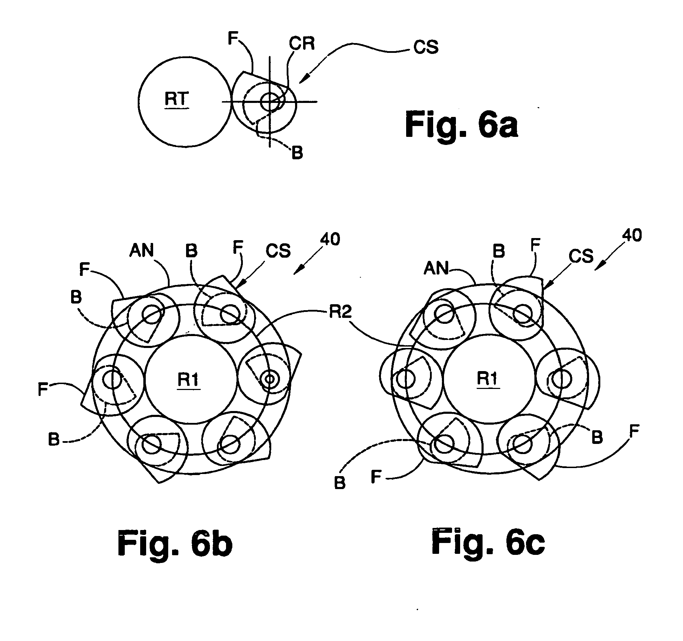

Fig. 6a shows a variant CS of a cam rolling member, whose peculiar characteristic is to have two profiles (preferably evolvent profiles) F, B (forward and back) arranged on two parallel planes. The member CS may be produced with two integral and facing cams, one for each profile F, B.

The advantage of the cam CS is to exploit for more than 180° of rotation its own contact profile during the thrust on a rotor (indicated by RT in fig. 6a). The consequence is a greater TR, because the motion imparted to the rotor RT is, as already said, the sum of two rotation motions of the rolling member CS, of which one is the rotation motion about its own axis CR. If the latter motion is lengthened, for every "satellite" revolution of a rolling member CS about the rotor RT, said rolling member has made it rotate more.

Figures 6b, 6c show an application scheme of the concept just illustrated, repeated for six cams CS along a circumference to constitute a CVT according to the invention denoted by 40.

There is a central cylindrical rotor R1 and an external annular rotor (or disc) R2, arranged one inside the other. The rotor R2 rotatably supports the cams CS. The cams CS have the profile F in contact with the rotor R1 and the profile B in contact with an external ring AN, fixed or not. Again, the overall structure is that of a free wheel.

The working principle is the same as for the figures 3a, 3b (offsetting of the rotor R2 to vary the TR), and it will not be repeated. Note that, however, every cam CS with the profile F rolls now on the rotor R1 for more than 180°, while the profile B remains always in contact with the ring AN, thereby ensuring the permanent contact between the profile F and the central rotor R1.

Other variants of the CVT according to the invention include for instance:
- CVTs with different number and profile of the cams employed in every rpm (or TR)-rising stage;
- CVTs with different number of rpm-rising stages set in cascade;
- CVTs with combinations of the described solutions. 12

## Claims

1. Continuously variable transmission-ratio mechanical transmission (10; 20; 30; 40) comprising
- a driving rotor (R2; R1-IN, 41 a), and
- a rotor (R1; R1-OUT; 38) driven by the driving rotor,
the two rotors being arranged one inside the other and so mounted as to be offset one with respect to the other, such that their mutual eccentricity can be varied,
- a plurality of rolling members (C; CD; C1, C2), placed between the rotors and having a contact profile along which they are able to roll on a rotor in order to impart thereto a rotary motion with increased angular velocity in function of the amount of eccentricity between the two rotors, whereby the rolling members are rotatably mounted on a rotor about an axis of rotation (CR) and the contact profile has a geometrical construction with variable distance from said axis, the rolling members (CD; CDS) also comprising a second contact profile,
**characterized by** further comprising a containment ring (AN) mounted around said members such that one of the two profiles is always in contact with it.

2. Transmission according to Claim 1, wherein the contact profile has a geometrical construction with variable distance from said axis which progressively increases.

3. Transmission according to Claim 2, wherein the rolling members are so arranged as to roll directly on a surface of a rotor, the contact profile having such a pattern/trend as to maintain a contact angle (α) substantially constant with said surface, preferably a substantially logarithmic spiral trend.

4. Transmission according to Claim 2, wherein the rolling members are so arranged as to roll directly on a surface of a rotor, the contact profile having such a pattern/trend as to maintain a contact angle (α) with said surface which has a decreasing or increasing pattern/trend between two predefined values.

5. Transmission according to Claim 1, wherein said two contact profiles are substantially equal and obtained specularly on two opposite sides of the rolling member.

6. Transmission according to Claim 1, wherein said two contact profiles (F, B) are arranged at a distance on two parallel planes.

7. Transmission according to Claim 6, wherein said two contact profiles (F, B) are produced with two integral and facing cams, one for each profile.

8. Transmission according to Claim 1, wherein the containment ring (AN) is mounted to rotate idle or integral with a rotor.

9. Transmission according to any of the preceding Claims, wherein a rotor is composed by two coaxial support rings (AN1, AN2) internally connected by pins (PR1) arranged with radial symmetry about the other rotor, on each pin being independently rotatably mounted two rolling members (CS) with contrary orientation.

10. Transmission according to any of the preceding Claims, wherein a rotor is composed by a support ring (32a) on every side of which there are pins (34a) arranged with radial symmetry about the rotation axis, on each pin being independently rotatably mounted two rolling members (CD) with contrary orientation.

11. Transmission according to Claim 9 and/or 10, comprising a rotor (38) central to said support ring or rings (AN1, AN2; 32a) with which the rolling members are in contact, being said support ring or rings rotatably mounted on a further external ring (36a) which is movable orthogonally to the central rotor such as to vary the eccentricity between said support ring or rings and said central rotor.

12. Transmission according to Claim 11, comprising a rotor (40) mounted in simultaneous contact with a first and second group of rolling members (CDa, CDb), being the two groups mounted on distinct rotors (32a, 32b), and being therefore the common rotor able to receive the rotary motion from the first group and to impart it to the second.

13. Transmission according to Claim 12, wherein said common rotor comprises a circular structure (40, 44) integral with it and having H cross-section, the structure being adapted to contain on its opposite sides two groups of rolling members (CDa, CDb) rotatably pivoted on two distinct rotors (32a, 32b).

14. Transmission according to any of Claims 5 to 13, wherein a rotor (41a) is constituted by a bell-like structure (42a) which is mounted with its peripheral edge in contact with one of the two contact profiles of a group of rolling members (CDa) rotatably pivoted on another rotor (32a).

## Patentansprüche

1. Mechanisches Getriebe (10; 20; 30; 40) mit stufenlos veränderlicher Übersetzung, bestehend aus
- einem Antriebsrotor (R2; R1-IN; 41a), und
- einem vom Antriebsrotor angetriebenen Abtriebsrotor (R1; R1-OUT; 38),
wobei beide Rotoren ineinander angeordnet sind und derart montiert, dass sie außer Achse versetzt werden können, damit ihre relative Exzentrizität geändert werden kann;
- mehreren rollenden Bauteilen (C; CD; C1, C2; CS), die zwischen den Rotoren angeordnet sind und ein ERSTES Kontaktprofil haben, entlang dem sie auf einem Rotor rollen können, um diesem eine Drehbewegung mit erhöhter Winkelgeschwindigkeit, in Funktion des Exzentrizitätsgrades zwischen den beiden Rotoren, zu erteilen, wobei
die rollenden Bauteile auf einem Rotor drehbar um eine Rotationsachse (CR) montiert sind und das Kontaktprofil einen geometrischen Aufbau mit einem variablen Abstand von der erwähnten Achse hat, wobei die rollenden Bauteile (CD; CDS) über ein zweites Kontaktprofil verfügen,
**dadurch gekennzeichnet, dass** es außerdem einen Schließring (AN) umfasst, der um die genannten Bauteile derart montiert ist, dass eines der beiden Profile immer mit ihm in Berührung ist.

2. Getriebe nach Anspruch 1, bei dem das ERSTE Kontaktprofil eine geometrische Struktur mit einem von der genannten Achse progressiv erhöhenden Abstand aufweist.

3. Getriebe nach Anspruch 2, bei dem die rollenden Bauteile derart angeordnet sind, dass sie direkt auf einer Oberfläche eines Rotors rollen können, wobei das ERSTE Kontaktprofil einen derartigen Verlauf, vorzugsweise einen im Wesentlichen logarithmischen Spiralenverlauf hat, dass ein im Wesentlichen konstanter Kontaktwinkel (α) mit der genannten Oberfläche gewährleistet werden kann.

4. Getriebe nach Anspruch 2, bei dem die rollenden Bauteile derart angeordnet sind, dass sie direkt auf einer Oberfläche eines Rotors rollen, wobei das ERSTE Kontaktprofil einen derartigen Verlauf hat, dass ein Kontaktwinkel (α) mit genannter Oberfläche bewahrt wird und einen zunehmenden bzw. abnehmenden Verlauf zwischen zwei vorgegebenen Werten hat.

5. Getriebe nach Anspruch 1, bei dem beide genannte Kontaktprofile im Wesentlichen gleich sind und spiegelbildlich auf zwei gegenüberliegenden Seiten der rollenden Bauteile gewonnen werden.

6. Getriebe nach Anspruch 1, bei dem beide genannte Kontaktprofile (F, B) mit einem bestimmten Abstand auf zwei parallelen Flächen angeordnet sind.

7. Getriebe nach Anspruch 6, bei dem beide mit einem bestimmten Abstand angeordnete Kontaktprofile (F, B) mit zwei einteilig ausgebildeten und nebeneinander liegenden Nocken, einer je Profil, realisiert sind.

8. Getriebe nach Anspruch 1, bei dem der Schließring (AN) so montiert ist, damit er lose oder fest an einem Rotor drehen kann.

9. Getriebe nach einem der vorherigen Ansprüche, bei dem ein Rotor aus zwei koaxialen Halterungsringen (AN1, AN2) besteht, die intern durch strahlensymmetrisch um den anderen Rotor angeordneten Zapfen miteinander verbunden sind, wobei auf jedem Zapfen zwei unabhängig drehbare rollende Bauteile (CS) in entgegengesetzter Richtung montiert sind.

10. Getriebe nach einem der vorherigen Ansprüche, bei dem ein Rotor aus einem Halterungsring (32a) besteht, wobei auf jeder Seite des Halterungsrings Zapfen (34a) strahlensymmetrisch um die Drehachse angeordnet sind, wobei auf jedem Zapfen zwei unabhängig drehbare rollende Bauteile (CD) in entgegengesetzter Richtung montiert sind.

11. Getriebe nach Anspruch 9 und/oder 10, bestehend aus einem zentralen Rotor (38) an dem genannten Halterungsring bzw. Ringen (AN1, AN2; 32a), mit dem die rollenden Bauteile in Berührung sind, wobei dieser Halterungsring bzw. diese Halterungsringe drehbar auf einem weiteren Außenring (36a) montiert ist/sind, der rechtwinklig zum Zentralrotor mobil ist, damit die Exzentrizität zwischen dem genannten Halterungsring bzw. -Ringen und dem genannten Zentralrotor geändert werden kann.

12. Getriebe nach Anspruch 11, bestehend aus einem Rotor (40), der in gleichzeitiger Berührung mit einer ersten und einer zweiten Gruppe von rollenden Bauteilen (CDa, CDb) montiert ist, wobei die zwei Gruppen auf gesonderten Rotoren (32a, 32b) montiert sind und der gemeinsame Rotor dazu dient, die Drehbewegung von der ersten Gruppe aufzunehmen, um diese an die zweite zu übertragen.

13. Getriebe nach Anspruch 12, bei dem der genannte gemeinsame Rotor aus einer mit ihm einteiligen runden Struktur mit H-förmigem Querschnitt besteht, die dazu dient, auf den zwei entgegengesetzten Seiten zwei Gruppen von rollenden Bauteilen (CDa, CDb) aufzunehmen, die auf zwei gesonderten Rotoren (32a, 32b) drehbar angelenkt sind.

14. Getriebe nach einem der vorherigen Ansprüche 5 bis 13, bei dem ein Rotor (41a) aus einer glockenförmigen Struktur (42a) besteht, die mit dem Außenrand in Berührung mit einem der beiden Kontaktprofilen einer Gruppe von rollenden Bauteilen (CDa) montiert ist, die drehbar auf einem anderen Rotor (32a) angelenkt sind.

## Revendications

1. Transmission mécanique (10; 20; 30; 40) à rapport de transmission variable en continu, comprenant :
- un rotor moteur (R2; R1-IN; 41a), et
- un rotor conduit (R1; R1-OUT; 38) par le rotor moteur,
les deux rotors étant disposés l'un dans l'autre et montés de façon désaxée l'un par rapport à l'autre, de manière à pouvoir varier leur excentricité relative ;
- plusieurs éléments roulants (C; CD; C1, C2; CS), placés entre les rotors et dotés d'un PREMIER profil de contact le long duquel ils sont en mesure de rouler sur un rotor pour lui transmettre un mouvement rotatoire ayant une vitesse angulaire accrue en fonction du degré d'excentricité entre les deux rotors, où
les éléments roulants sont montés en pouvant tourner autour d'un axe de rotation (CR) sur un rotor et où le profil de contact a une construction géométrique ayant une distance variable par rapport à cet axe, les éléments roulants (CD; CDS) comprenant en outre un second profil de contact,
**caractérisé par** le fait de comprendre également un anneau de retenue (AN) monté autour de ces éléments, de manière à ce que l'un des deux profils soit toujours en contact avec celui-ci.

2. Transmission selon la revendication 1, dans laquelle le PREMIER profil de contact a une construction géométrique dont la distance augmente progressivement par rapport à cet axe.

3. Transmission selon la revendication 2, dans laquelle les éléments roulants sont disposés de manière à rouler directement sur la surface d'un rotor, le PREMIER profil de contact ayant un déplacement lui permettant de conserver un angle de contact (α) fondamentalement constant avec la surface en question, de préférence à un déplacement essentiellement en spirale logarithmique.

4. Transmission selon la revendication 2, dans laquelle les éléments roulants sont disposés de manière à rouler directement sur la surface d'un rotor, le PREMIER profil de contact ayant un déplacement lui permettant de conserver avec cette surface un angle de contact (α) dont le déplacement est croissant ou décroissant entre deux valeurs prédéfinies.

5. Transmission selon la revendication 1, dans laquelle les deux profils de contact sont fondamentalement identiques et réciproquement réalisés sur deux côtés opposés de l'élément roulant.

6. Transmission selon la revendication 1, dans laquelle ces deux profils de contact (F, B) sont disposés à une certaine distance l'un de l'autre sur deux plans parallèles.

7. Transmission selon la revendication 6, dans laquelle les deux profils de contact (F, B) disposés à une certaine distance l'un de l'autre, sont réalisés à l'aide de deux cames solidaires et côte à côte, une pour chaque profil.

8. Transmission selon la revendication 1, dans laquelle l'anneau de retenue (AN) est monté pour tourner de manière folle ou solidairement à un rotor.

9. Transmission selon l'une quelconque des revendications précédentes, dans laquelle un rotor est composé de deux anneaux de support coaxiaux (AN1, AN2) reliés intérieurement par des tourillons (PR1) disposés en symétrie rayonnée autour de l'autre rotor ; deux éléments roulants (CS) susceptibles de rouler de manière indépendante étant montés sur chacun des tourillons, selon une orientation opposée l'un par rapport à l'autre.

10. Transmission selon l'une quelconque des revendications précédentes, dans laquelle un rotor est composé d'un anneau de support (32a), sur chaque face duquel se trouvent des tourillons (34a) disposés en symétrie rayonnée autour de l'axe de rotation ; deux éléments roulants (CD) susceptibles de rouler de manière indépendante étant montés sur chacun des tourillons, selon une orientation opposée l'un par rapport à l'autre.

11. Transmission selon la revendication 9 et/ou 10, comprenant un rotor central (38) situé sur cet anneau ou ces anneau(x) de support (AN1, AN2; 32a) avec lequel les éléments roulants sont en contact, cet anneau ou ces anneaux de support étant monté(s) en pouvant pivoter sur un autre anneau externe (36a) qui est orthogonalement mobile par rapport au rotor central, de manière à varier l'excentricité entre cet anneau ou ces anneaux de support et le rotor central.

12. Transmission selon la revendication 11, comprenant un rotor (40) monté en contact simultané avec un premier et un second groupes d'éléments roulants (CDa, CDb), les deux groupes étant montés sur des rotors distincts (32a, 32b) et le rotor étant commun, donc en mesure de recevoir le mouvement rotatoire du premier groupe pour l'imprimer au second.

13. Transmission selon la revendication 12, dans laquelle ce rotor commun comprend une structure circulaire (40, 44) solidaire de celui-ci et doté d'une section en H, la structure étant en mesure de contenir, sur les deux côtés opposés, deux groupes d'éléments roulants (CDa, CDb) fixés de manière à pouvoir rouler sur deux rotors distincts (32a, 32b).

14. Transmission selon l'une quelconque des revendications 5 à 13, dans laquelle un rotor (41a) est constitué par une structure en cloche (42a) montée de façon à ce que son bord périphérique soit en contact avec l'un des deux profils de contact d'un groupe d'éléments roulants (CDa) fixés de manière à pouvoir rouler sur un autre rotor (32a).
